# EUROPÄISCHE PATENTSCHRIFT

(11) **EP 0 879 248 B1**
(45) Veröffentlichungstag und Bekanntmachung des Hinweises auf die Patenterteilung: **12.12.2001**
(21) Anmeldenummer: 97901609.4
(22) Anmeldetag: 28.01.1997
(51) Int. Cl.: C08B 37/08, C09H 7/00, C08H 1/06

(54) **VERNETZUNGSPRODUKTE VON AMINOGRUPPEN-HALTIGEN BIOPOLYMEREN**
CROSS-LINKING PRODUCTS OF AMINO-GROUP-CONTAINING BIOPOLYMERS
PRODUIT DE RETICULATION DE BIOPOLYMERES CONTENANT DES GROUPES AMINO

(30) Priorität: 09.02.1996 DE 19604706
(43) Veröffentlichungstag der Anmeldung: 25.11.1998
(73) Patentinhaber: MERCK PATENT GmbH, 64293 Darmstadt (DE)
(72) Erfinder: NIES, Berthold, Dr., D-64407 Fränkisch-Crumbach (DE); Ritter, Wolfgang, Dr., 67591 Offstein (DE)
(86) Internationale Anmeldenummer: EP9700364
(87) Internationale Veröffentlichungsnummer: WO9729132

(56) Entgegenhaltungen:
- DE-A- 4 034 871
- US-A- 3 296 155
- CHEMICAL ABSTRACTS, vol. 112, no. 24, 11.Juni 1990 Columbus, Ohio, US; abstract no. 223161, XP002030274 & JP 01 297 484 A (NIPPON OILS AND FATS CO. LTD) 30.November 1989

## Beschreibung

Die Erfindung betrifft Vernetzungsprodukte von Aminogruppen-haltigen Biopolymeren und einem Carbonsäuredi- oder -polyanhydrid wie Pyromellitsäuredianhydrid oder Polymaleinsäureanhydrid. Unter Aminogruppen-haltigen Biopolymeren sind insbesondere Chitosan zu verstehen.

Chitosan ist ein kationisches Biopolymer, das aus wiederkehrenden Einheiten von 1,4-verknüpftem D-Glucosamin aufgebaut ist. Chitosan ist das Desacetylierungsprodukt von Chitin, das als Gerüstsubstanz der Panzer und Schalen von Krebsen, Insekten u.ä. in der belebten Natur weit verbreitet ist. Als natürlicher Rohstoff, der in einfacher und umweltverträglicher Weise aus natürlichen regenerierbaren Quellen zugänglich ist, findet Chitosan vermehrt Interesse in industriellen Anwendungen. Eine wesentliche Eigenschaft von Chitosan ist die Fähigkeit, viskose wäßrige Lösungen zu bilden. Derartige Lösungen können in Chemie, Pharmazie, Kosmetik und Lebensmitteltechnologie vielfältige Anwendungen finden. Beispiele hierfür sind etwa der Einsatz als Verdickungsmittel, Gelbildner, Bindemittel, Filmbildner und Klebstoff. Chitosan dient auch als natürlich abbaubares Flockungshilfsmittel für die Abwasserreinigung. Dem gleichen Anwendungszweck kommt auch die Eigenschaft, Schwermetalle zu binden, zugute. Als biokompatibles bzw. bioresorbierbares Polymer ist Chitosan besonders interessant in pharmazeutischen und medizinischen Anwendungen, wie beispielsweise als Bestandteil von Wundabdeckungen oder von Werkstoffen für die Endoprothetik.

Allerdings setzt die spezifische Löslichkeitscharakteristik von Chitosan dem praktischen Einsatz Grenzen. Als wäßrige Lösungsmedien für Chitosan sind nur einwertige Mineralsäuren wie Salzsäure, sowie wäßrige Lösungen einiger organischer Säuren, wie beispielsweise Essigsäure und Milchsäure geeignet. In anderen Medien bzw. üblichen Lösungsmitteln ist Chitosan praktisch unlöslich. Chitosan-Lösungen können demnach nur dort eingesetzt werden, wo das wäßrig-saure Lösungsmedium unproblematisch ist. Die Einstellung bestimmter Viskositätswerte ist im wesentlichen nur über die Konzentration von Chitosan in der Lösung möglich. Hochviskose Lösungen bzw. Gele sind nur durch eine entsprechend hohe Wahl der Chitosan-Konzentration zu erzielen, was einerseits schwierig und andererseits für viele Anwendungen wiederum unerwünscht oder nachteilig ist. Wünschenswert sind hohe Viskositätswerte bei Lösungen, sowie Gele mit stabiler Konsistenz bei vergleichsweise niedriger Chitosan-Konzentration.

Chemical Abstracts, Vol. 112, Nr. 24, 11.6.1990, Columbus, Ohio offenbart ein Umsetzungsprodukt von Gelatine mit Olefin-Maleinsäureanhydrid-Copolymer in wäßriger Lösung.

Es wurde nun gefunden, daß sich Chitasan mit einem Carbonsäuredi- oder -polyanhydrid zu Vernetzungsprodukten in Form von Gelen umsetzen lassen.

Gegenstand der Erfindung sind somit Vernetzungsprodukte aus Chitosan und einem Carbonsäuredi- oder -polyanhydrid.

Gegenstand der Erfindung ist auch ein Verfahren zur Herstellung derartiger Vernetzungsprodukte, wobei man Chitosan mit einem Carbonsäuredi- oder -polyanhydrid umsetzt.

Als Vernetzungsreagenzien für Chitosan kommen insbesondere Carbonsäuredianhydride, wie beispielsweise Pyromellitsäuredianhydrid, sowie Carbonsäurepolyanhydride, wie etwa Potymaleinsäureanhydrid, in Betracht. Verbindungen dieser Art sind bekannt und ohne weiteres verfügbar. Oligomeres und polymeres Maleinsäureanhydrid läßt sich durch radikalische Polymerisation von Maleinsäureanhydrid erhalten. Bevorzugt ist ein Polymaleinsäureanhydrid von einem Molekulargewicht bis zu 1000. Es sind auch Cooligomere oder Copolymere von Maleinsäureanhydrid mit anderen vinylischen Monomeren einsetzbar, sofern diese mindestens zwei Anhydridgruppen im Molekül enthalten.

Chitosan ist in jeder beliebigen und handelsüblichen Form in dem erfindungsgemäßen Verfahren verwendbar. Die charakterischten Merkmale des einzusetzenden Chitosan können in einem weiten Bereich variieren; diese sind insbesondere abhängig von Molekulargewicht und Desacetylierungsgrad.

Die Vernetzung basiert auf der Reaktion freier Aminogruppen in Chitosan mit Säureanhydridgruppen der vorgenannten Vernetzungsreagenzien. Hierbei geht jeweils ein Säureäquivalent der Anhydridgruppe mit einer Aminogruppe einer Glucosamineinheit des Chitosan eine Amidbindung ein, während das zweite Säureäquivalent in eine freie Carbonsäuregruppe umgewandelt wird. Dadurch, daß die Vernetzungsreagenzien mindestens zwei Säureanhydridgruppen pro Molekül aufweisen, kann eine Bindungsknüpfung zwischen unterschiedlichen Polymerketten von Chitosan also eine Vernetzung, erfolgen. Die infolge der Vernetzung in den Polymerverband eingeführten freien Carboxylgruppen verstärken den hydrophilen Charakter des Vernetzungsproduktes, was sich insbesondere in der Aufnahmefähigkeit von Wasser, der Quellbarkeit mit Wasser und der Bildung von Hydrogelen zeigt. Chitosan und Vernetzungsreagenz können in weitgehend beliebigem Verhältnis miteinander umgesetzt werden. Eine praktische Begrenzung des Verhältnisses liegt allenfalls bei äquivalenter Anzahl von freien Aminogruppen in Chitosan und Säureanhydridgruppen im Vernetzungsreagenz. Die Eigenschaften der resultierenden Vernetzungsprodukte werden im wesentlichen von Vernetzungsgrad und Hydrophilie über dieses Verhältnis bestimmt und lassen sich entsprechend einsteilen.

Die Reaktion zwischen Chitosan und Vernetzungsreagenz läßt sich problemlos und vor allem unter milden Bedingungen vornehmen. Hierzu wird Chitosan zunächst in einem der hierfür geeigneten Lösungsmittel aufgelöst. Zweckmäßig ist eine Lösung von Chitosan in wäßrig-verdünnter Essigsäure. Zu dieser Lösung gibt man dann eine Lösung des Carbonsäuredi- oder -polyanhydrid. Als Lösungsmittel hierfür eignet sich vorzugsweise Aceton. Die Vernetzungsreaktion setzt im wesentlichen spontan ein. Als Reaktionsbedingungen sind Temperaturen zwischen Raumtemperatur und 100 °C sowie Normaldruck ausreichend. Der Reaktionsfortschritt zeigt sich durch Gelbildung. Nach Reaktions-abschluß können durch Waschen mit Wasser die organischen Lösungsmitteln entfernt und das Vernetzungsprodukt als stabiles Hydrogel erhalten werden. Es ist ohne weiteres möglich, aus diesem den Wasseranteil zu entfernen und nach Wunsch durch erneuten Wasserzusatz das Hydrogel zu rekonstituieren.

Das erfindungsgemäße Vernetzungsprodukt von Chitosan kann in vielfältiger Weise eingesetzt werden, sowohl in Form von Gelen, als auch in trockener Form. So können daraus beispielsweise wasser-bzw. feuchtigkeitsbindende Pulver, weiterhin Formkörper, Folien, Membranen, Fäden und Gewebe sowie Beschichtungen auf verschiedensten Substraten hergestellt werden. Im medizinisch-pharmazeutischen Bereich eignet es sich ebenfalls etwa als Material für Medikamentenkapseln. Die besondere Biokompatibilität sowie Bioabsorbierbarkeit des Materials begründet seine Eignung als Matrixmaterial für implantierbare Medikamententräger, weiterhin als Werkstoff für Implantate oder andere chirurgische Hilfsmittel, wie etwa Nahtmaterialien oder Wundabdeckungen. Das Vorhandensein von freien Carboxylgruppen in dem Vernetzungsprodukt eröffnet die Möglichkeit weiterer chemischer Modifikation des Materials.

### Beispiel 1

10 g Chitosan mit einem Desacetylierungsgrad von 87 % und einem mittleren Molekulargewicht von 300.000 wird zu einer 3%igen Lösung in 1%iger wäßriger Essigsäure aufgelöst. Dieser Lösung wird unter ständigem Rühren langsam Aceton zugesetzt bis die Lösung etwa 30 % Aceton enthält. Anschließend wird dieser Lösung 5 ml einer 5%igen Lösung in Aceton von Polymaleinsäureanhydrid von einem Molekulargewicht von ca. 1000 zugesetzt. In etwa 3 Minuten setzt eine Gelbildung ein, die nach etwa 2 Std. abgeschlossen ist. Die gesamte Reaktion findet bei Raumtemperatur statt. Durch mehrmaliges Waschen mit Wasser und Erwärmen auf 60 °C werden die organischen Lösungsmittel entfernt. Man erhält ein stabiles Hydrogel.

### Beispiel 2

Es wird wie in Beispiel 1 vorgegangen jedoch mit Pyromellitsäuredianhydrid.

## Patentansprüche

1. Vernetzungsprodukte von Chitosan erhältlich durch Umsetzung von Chitosan mit einem Carbonsäuredi- oder -polyanhydrid.

2. Vernetzungprodukte nach Anspruch 1, erhältlich durch Umsetzung von Chitosan mit Pyromellitsäuredianhydrid.

3. Vernetzungsprodukte nach Anspruch 1, erhältlich durch Umsetzung von Chitosan mit einem Polymaleinsäureanhydrid, vorzugsweise von einem Molekulargewicht bis zu 1000.

4. Verfahren zur Herstellung von Vernetzungsprodukten von Chitosan, **dadurch gekennzeichnet, daß** man Chitosan in wäßrig-acetonischer Essigsäurelösung mit einem Carbonsäuredi- oder -polyanhydrid umsetzt.

5. Verfahren nach Anspruch 4, **dadurch gekennzeichnet, daß** die Umsetzung mit Pyromellitsäuredianhydrid erfolgt.

6. Verfahren nach Anspruch 2, **dadurch gekennzeichnet, daß** die Umsetzung mit Polymaleinsäureanhydrid, vorzugsweise von einem Molekulargewicht bis zu 1000, erfolgt.

## Claims

1. Crosslinked products of chitosan, obtainable by reacting chitosan with a carboxylic acid di- or polyanhydride.

2. Crosslinked products according to Claim 1, obtainable by reacting chitosan with pyromellitic dianhydride.

3. Crosslinked products according to Claim 1, obtainable by reacting chitosan with a polymaleic anhydride, preferably with a molecular weight of up to 1000.

4. Process for the preparation of crosslinked products of chitosan, **characterized in that** chitosan in a solution of acetic acid in aqueous acetone is reacted with a carboxylic acid di- or polyanhydride.

5. Process according to Claim 2, **characterized in that** the reaction takes place with pyromellitic dianhydride.

6. Process according to Claim 2, **characterized in that** the reaction takes place with polymaleic anhydride, preferably with a molecular weight of up to 1000.

## Revendications

1. Produit de réticulation de chitosan qu'on peut obtenir par réaction de chitosan avec un di- ou polyanhydride d'acide carboxylique.

2. Produit de réticulation selon la revendication 1, qu'on peut obtenir par réaction de chitosan avec le dianhydride d'acide pyromellique.

3. Produit de réticulation selon la revendication 1, qu'on peut obtenir par réaction de chitosan avec un polyanhydride d'acide maléique, ayant de préférence une masse moléculaire de 1000 au maximum.

4. Procédé pour la préparation de produits de réticulation de chitosan, **caractérisé en ce qu'**on met à réagir le chitosan dans une solution aqueuse-acétonique d'acide acétique avec un di- ou polyanhydride d'acide carboxylique.

5. Procédé selon la revendication 4, **caractérisé en ce qu'**on réalise la réaction avec le dianhydride d'acide pyromellique.

6. Procédé selon la revendication 2, **caractérisé en ce qu'**on réalise la réaction avec un polyanhydride d'acide maléique, ayant de préférence une masse moléculaire de 1000 au maximum.
